# EUROPÄISCHE PATENTSCHRIFT

(11) **EP 2 883 654 B1**
(45) Veröffentlichungstag und Bekanntmachung des Hinweises auf die Patenterteilung: **13.03.2019**
(21) Anmeldenummer: 15150656.5
(22) Anmeldetag: 07.07.2010
(51) Int. Cl.: B23Q 3/08, F01D 25/00, B23Q 3/06, F01D 5/28, B29C 65/48, F16B 11/00

(54) **Vorrichtung und Verfahren zum Anordnen eines Bauteils an einem Bauteilträger**
Device and method for arranging a component on a component carrier
Dispositif et procédé d'agencement d'un composant sur un porte-composant

(30) Priorität: 09.07.2009 DE 102009032703
(43) Veröffentlichungstag der Anmeldung: 17.06.2015
(62) Teilanmeldung aus: 10744847.4
(73) Patentinhaber: MTU Aero Engines AG, 80995 München (DE)
(72) Erfinder: Huttner, Roland, 82287 Jesenwang (DE); Fessler-Knobel, Martin, 80639 München (DE)

(56) Entgegenhaltungen:
- EP-A1- 1 947 156
- EP-A1- 2 429 758
- WO-A1-01/97707
- WO-A1-02/45614
- DE-A1- 19 920 365
- DE-A1-102007 011 729
- DE-A1-102007 020 957
- DE-U1-202004 009 050
- JP-A- 2001 054 945
- US-A1- 2004 026 023
- US-A1- 2008 007 849

## Beschreibung

Die Erfindung betrifft eine Vorrichtung zum Anordnen eines Bauteils an einem Bauteilträger nach dem Oberbegriff des Patentanspruchs 1 und ein Verfahren zum Anordnen eines Bauteils an einem derartigen Bauteilträger.

Es ist bekannt, zu bearbeitende Bauteile über eine Klebeverbindung an einem Bauteilträger zu befestigen. Bekannte Fügevorrichtungen dieser Art sehen vor, das Bauteil in einem vorrichtungsseitigen Anlagensystem zu positionieren und dann das Bauteil über das Anlagensystem zum lagefixierten Bauteilträger auszurichten. Ein sich hierbei einstellender Klebespalt zwischen dem Bauteil und dem Bauteilträger ergibt sich aus der Form des Bauteils und wird somit unmittelbar von Formtoleranzen des Bauteils beeinflusst.

Ebenso ist es bekannt, das Bauteil ohne eine Referenzierung zum Bauteilträger auszurichten und mit diesem zu verbinden. Eine derartige Variante ist zum Beispiel in der DE 10 2007 020 957 A1 der Anmelderin gezeigt. Bei dieser Variante kann ein Klebespalt zwischen dem Bauteil und dem Bauteilträger optimal eingestellt werden, jedoch ist stets ein individuelles Vermessen des Bauteils an dem Bauteilträger mit anschließender Korrektur der Achsen in der jeweiligen Bearbeitungsmaschinen notwendig.

In der europäischen Offenlegungsschrift EP 1 947 156 A1 ist eine Fügevorrichtung nach dem Oberbegriff des Anspruchs 1 zum Anordnen eines Bauteils an einem Bauteilträger mit einem Anlagesystem zur Positionierung und mit einer Aufnahme zum Einspannen des Bauteilträgers in der Fügevorrichtung beschrieben. Das Bauteil ist dabei über einen Adapter an dem Bauteilträger angeordnet, der zumindest abschnittsweise aus einem lichtdurchlässigen Basiskörper besteht und eine einer Bauteilfläche zugewandte konturnahe Fügefläche aufweist sowie eine einer Bauteilträgerfläche zugewandte Verbindungsfläche hat.

Aufgabe der Erfindung ist es, eine Vorrichtung und ein Verfahren zum Anordnen eines Bauteils an einem Bauteilträger zu schaffen, die die vorgenannten Nachteile beseitigen und eine präzise Positionierung und Anordnung des Bauteils zum bzw. am Bauteilträger bei optimalen Klebespalt erlauben.

Diese Aufgabe wird gelöst durch eine Vorrichtung zum Anordnen eines Bauteils an einem Bauteilträger mit den Merkmalen des Patentanspruchs 1 und durch ein Verfahren zum Anordnen eines Bauteils an einem Bauteilträger nach dem Patentanspruch 6.

Eine erfindungsgemäße Fügevorrichtung zum Anordnen eines Bauteils an einem Bauteilträger hat ein Anlagesystem zur Positionierung des Bauteils in der Fügevorrichtung und eine Aufnahme zum Einspannen des Bauteilträgers in der Fügevorrichtung. Erfindungsgemäß ist ein Adapter zum Anordnen des Bauteils an dem Bauteilträger vorgesehen.

Somit wird das Bauteil nicht unmittelbar an dem Bauteilträger fixiert, sondern mittelbar über einen Adapter bzw. ein Zwischenstück. Das Anlagesystem des Bauteils steht dadurch in fester Relation zu dem Anlagesystem des Bauteilträgers. Das Bauteil kann mit dem Bauteilträger präzise verbunden werden und gleichzeitig kann ein optimaler Klebespalt und somit eine optimale Klebeverbindung zwischen dem Adapter und dem Bauteil eingestellt werden. Der Klebespalt kann den jeweiligen Anforderungen des Klebemittels angepasst werden. Formabweichungen des Bauteils werden nicht wie beim bekannten Stand der Technik durch die Dicke des Klebespaltes ausgeglichen, sondern durch die Position des Adapters zum Bauteil und zum Bauteilträger.

Der Adapter hat zumindest eine einer Bauteilfläche zugewandte konturnahe Fügefläche und eine einer Bauteilträgerfläche zugewandte Verbindungsfläche. Die konturnahe Fügefläche erlaubt bei einem Verschieben des Adapters zum Bauteil die Einhaltung eines zuvor eingestellten optimalen Klebespaltes zwischen dem Bauteil und dem Adapter.

Zur verbesserten Spaltausbildung ist es vorteilhaft, wenn die Fügefläche kleiner als die Bauteilfläche ist und somit nur einen Abschnitt der Bauteilfläche bedeckt.

Die Aushärtung des Klebemittels lässt sich weiter verbessern, wenn eine Vielzahl von Fügeflächen vorgesehen sind, die zur Erzielung einer größtmöglichen Steifigkeit des Bauteils verhältnismäßig weit voneinander beabstandet sind. Eine Variante sieht zum Beispiel vor, den Adapter als ein Gitter auszubilden.

Bei einem Ausführungsbeispiel besteht der Adapter aus einem zumindest abschnittweise lichtdurchlässigen Basiskörper, beispielsweise Quarzglas. Hierdurch kann eine elektromagnetische Strahlung aussendende Strahlungsquelle an einer von der Fügefläche abgewandten Seite des Adapters angeordnet sein, so dass sich der Adapter zwischen dem Bauteil und der Strahlungsquelle befindet und die Fügevorrichtung kompakt ausführbar ist. Beispielsweise kann der Adapter mit Ausnehmungen versehen sein, die mit lichtdurchlässigem Material gefüllt sind.

Eine Variante sieht zur Erreichung einer hohen Gestaltungsfreiheit der Fügefläche vor, diese aus einem anderen Material als den Basiskörper des Adapters herzustellen.

Zur Kontrolle der Sollposition des Bauteils in dem Anlagesystem der Vorrichtung sind entsprechende Sensoren vorgesehen.

Der Bauteilträger ist bevorzugterweise in der Aufnahme der Vorrichtung lagefixiert, so dass versehentliche Positionsveränderungen des Bauteilträgers vermieden werden.

Zur Kontrolle der Sollposition des Bauteilträgers in der Aufnahme sind entsprechende Sensoren vorgesehen.

Bei einem Ausführungsbeispiel ist der Bauteilträger eine Basisplatte eines Nullpunkt-Spannsystems. Hierdurch ist ein schnelles und einfaches Einrüsten einer die Bearbeitungsplatte mit dem Bauteil aufnehmenden folgenden Bearbeitungsmaschine möglich.

Zur Sicherung des Adapters und des Bauteils in ihren ausgerichteten Positionen beim Aushärten des Klebemittels sind Stützelemente, beispielsweise Federelemente, zum Stützen des Adapters vorgesehen.

Bei einem erfindungsgemäßen Verfahren zum Anordnen eines Bauteils an einem Bauteilträger wird der Bauteilträger in einer Aufnahme einer Fügevorrichtung ausgerichtet und lagefixiert. Dann wird ein Anlagesystem der Fügevorrichtung eingestellt und das Bauteil an dem Anlagesystem positioniert. Anschließend wird ein Adapter zum Verbinden des Bauteils mit dem Bauteilträger bereitgestellt. Danach wird eine Klebeverbindung zwischen dem Adapter und dem Bauteil unter Einstellung eines Sollspalts zwischen dem Adapter und dem Bauteil hergestellt. Anschließend wird eine Klebeverbindung zwischen dem Adapter und dem Bauteilträger unter Beibehaltung des Sollspaltes zwischen dem Adapter und dem Bauteil hergestellt. Abschließend werden die Klebeverbindungen ausgehärtet.

Bei einem bevorzugten Ausführungsbeispiel erfolgt die Aushärtung des Klebemittels durch eine andersartige Strahlung als das Aufheben der Klebeverbindungen, zum Beispiel mittels elektromagnetischer Strahlung. Die zum Lösen verwendete Strahlung kann hierbei derart gewählt werden, dass diese die Klebung erwärmt und somit schädigt.

Sonstige vorteilhafte Ausführungsbeispiele sind Gegenstand weiterer Unteransprüche.

Im Folgenden werden bevorzugte Ausführungsbeispiele der Erfindung anhand schematischer Darstellungen näher erläutert. Es zeigt
Figur 1 eine geschnittene Seitenansicht eines ersten Ausführungsbeispiels der Erfindung, und
Figur 2 einen Schnitt entlang der Linie A-A aus Figur 1.

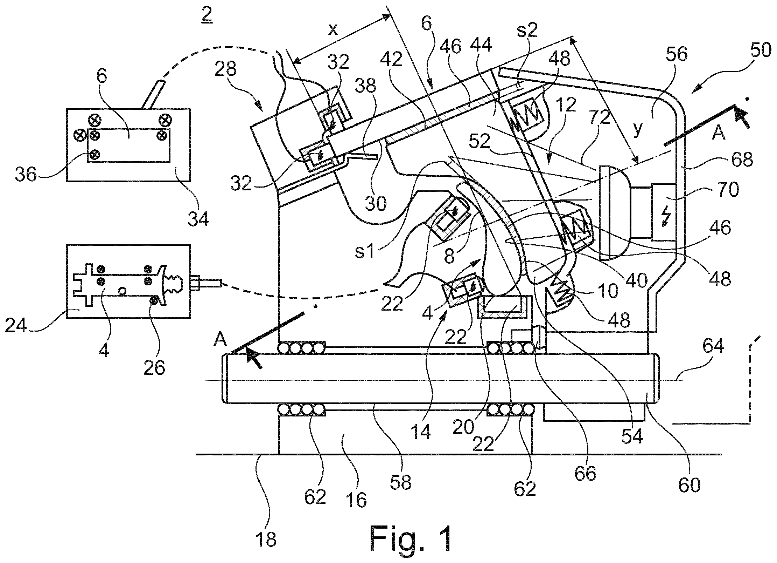

Figur 1 zeigt eine erfindungsgemäße Fügevorrichtung 2 zur Anordnung und Ausrichtung eines Bauteils 4 an einem Bauteilkörper 6. Das Bauteil 4 ist als eine Turbinen- bzw. Verdichterschaufel eines Flugzeugtriebwerks dargestellt und hat ein Schaufelblatt mit einer etwa konkaven Oberfläche 8 und einer von dieser abgewandten etwa konvexen Oberfläche 10.

Das Bauteil 4 ist erfindungsgemäß über einen Adapter 12 an dem Bauteilträger 6 angeordnet und in einem Anlagesystem 14 der Fügevorrichtung 2 positioniert. Das Anlagesystem 14 ist an einem Seitenabschnitt eines Grundkörpers 16 der Fügevorrichtung ausgebildet, der sich mit seinem Fußabschnitt auf einem Arbeitsboden 18 abstützt. Zur Kontrolle der richtigen Position in dem Anlagesystem 14 sind bei dem dargestellten Ausführungsbeispiel sechs elektrische Sensoren 22 vorgesehen, die im Bereich der konkaven Oberfläche 8 und einer Anströmkante 20 an dem Bauteil 4 angreifen. In der gewählten Darstellung sind jedoch lediglich zwei Sensoren 22 sichtbar. Die Sensoren 22 stehen mit einer Anzeigetafel 24 in Verbindung, die jeweils eine einem Sensor 22 zugeordnete Kontrolllampe 26 aufweist, die bei richtiger bzw. fehlerhafter Positionierung ein optisches Signal aussendet.

Der Bauteilträger 6 ist eine Basis- bzw. Grundplatte eines Nullpunkt-Spannsystems und mit seinem Randabschnitt in einer Aufnahme 28 der Fügevorrichtung 2 lagefixiert. Er ist als eine Standartschnittstelle für eine Bauteilfamilie mit einer ebenen Befestigungsfläche 30 zur Anbindung des Adapters 12 ausgebildet.

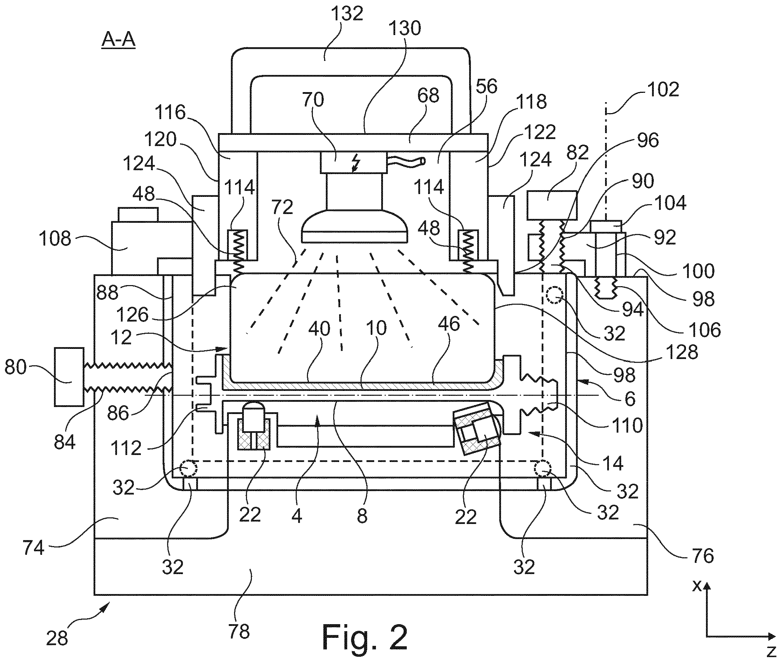

Die Aufnahme 28 ist fest mit einem Kopfabschnitt des Grundkörpers 16 verbunden und wie in Figur 2 gezeigt u-förmig ausgebildet. Zur Kontrolle der Position des Bauteilträgers 6 sind sechs elektrische Sensoren 32 vorgesehen, die sich bei richtiger Einspannung des Bauteilträgers 6 jeweils mit dem Bauteilträger 6 in Anlage befinden. In der gewählten Darstellung sind jedoch lediglich zwei Sensoren 32 sichtbar. Die Sensoren 32 stehen mit einer Anzeigetafel 34 in Verbindung, die jeweils eine einem Sensor 32 zugeordnete Kontrolllampe 36 aufweist, die bei richtiger bzw. fehlerhafter Positionierung ein optisches Signal aussenden. Zur Sicherung des Bauteilträgers 6 in seiner Position ist eine Federzunge 38 vorgesehen, die mit einem Endabschnitt zwischen dem Kopfabschnitt des Grundkörpers 16 und der Aufnahme 28 angeordnet ist und mit ihrem freien Endabschnitt im Randbereich der Befestigungsfläche 30 angreift.

Der Adapter 12 hat eine in etwa L-förmige Gestalt und weist eine zur konvexen Oberfläche 10 konturnahe Fügefläche 40 sowie eine ebene Verbindungsfläche 42 auf. Er hat einen Basiskörper 44 aus einem lichtdurchlässigen Material, beispielsweise Quarzglas. Die Fügefläche 40 besteht aus einem anderen lichtdurchlässigem Material und ist als eine Beschichtung auf den Basiskörper 44 aufgetragen. Unter Berücksichtigung von Figur 2 bedeckt in dem gezeigten Ausführungsbeispiel die Fügefläche 40 etwa die gesamte ihr zugewandte konvexe Oberfläche 10. Der Adapter 12 ist über jeweils eine Klebeverbindung mit der konvexen Oberfläche 10 des Bauteils 4 und mit dem der Befestigungsfläche 30 des Bauteilträgers 6 verbunden. Zur Herstellung der Klebeverbindungen zwischen die Fügefläche 40 und der konvexen Oberfläche 10 sowie zwischen der Verbindungsfläche 42 und der Befestigungsfläche 30 ist ein geeignetes Klebemittel 46 vorgesehen, das jeweils einen Klebespalt s1, s2 zwischen dem Adapter 12 und dem Bauteil 4 sowie zwischen dem Adapter 12 und dem Bauteilträger 6 definiert, wobei der Klebespalt s1 zwischen dem Bauteil 4 und dem Adapter 12 mit einer optimalen Dicke eingestellt ist.

Zum Sichern des Adapters 12 in seiner ausgerichteten Position sind eine Vielzahl von Federelementen 48 vorgesehen, die sich an einer Schutzhaube 50 der Fügevorrichtung 2 abstützen und an einer zur Fügefläche 40 entgegengesetzten Adapterfläche 52 bzw. an einer zur Verbindungsfläche 42 entegegengesetzten Adapterfläche 54 angreifen. Die Schutzhaube 50 begrenzt einen Arbeitsraum 56 und ist auf einem Endabschnitt einer sich durch eine Bohrung 58 des Grundkörpers 16 erstreckenden Achse 60 angeordnet. Die Achse 60 ist in der Bohrung 58 über in radialen Zurückstufungen der Bohrung 58 eingesetzten Lagern 62 entlang ihrer Längsachse 64 verfahrbar und um ihre Längssachse 64 verschwenkbar. Der Arbeitsraum 56 ist geschlossen, wenn sich die Schutzhaube 50 mit einem in den Grundkörper 16 eingesetzten Anschlag 66 in Anlage befindet.

Zum Aushärten bzw. zum Aufheben der Klebeverbindungen ist an einer Rückwand 68 der Schutzhaube 50 eine Strahlungsquelle 70 angeordnet, die in Richtung des Bauteils 4 und durch den Adapter 12 hindurch elektromagnetische Strahlung 72 wie Licht emittiert.

Gemäß der Schnittdarstellung in Figur 2 ist die Aufnahme 28 U-förmig mit einer linken Seitenwange 74 und einer rechten Seitenwange 76 ausgebildet, die über einen Steg 78 miteinander verbunden sind. Der Bauteilträger 6 ist rechteckig ausgeführt und umfangsseitig von der Aufnahme 28 beabstandet. Zum Ausrichten des Bauteilträgers 6 in der Aufnahme 28 in z-Richtung und in x-Richtung sind zwei Stellschrauben 80, 82 vorgesehen. Die Stellschraube 80 beaufschlagt mit ihrem Gewindefuß 86 eine Seitenfläche 88 des Bauteilträgers 6 in
z-Richtung und ist in einer Innengewindebohrung 84 der linken Seitenwange 74 geführt. Die Stellschraube 82 zur Positionierung des Bauteilträgers 6 in x-Richtung ist in einer Innenengewindebohrung 90 eines Arms 92 im Bereich der rechten Seitenwange 76 geführt und greift mit ihrem Gewindefuß 94 ebenfalls an einer Seitenfläche 96 des Bauteilträgers 6 an. Zum Einsetzen des Bauteilträgers 6 in die Aufnahme ist der Arm 92 verschwenkbar an einer Stirnfläche 98 der rechten Seitenwange 76 gelagert. Hierzu weist der Arm 92 eine Durchgangsbohrung 100 auf, durch die eine eine Schwenkachse 102 definierende Klemmschraube 104 geführt ist, die mit einem Innengewinde 106 der rechten Seitenwange 76 in Wirkeingriff steht. Ein ähnlicher schwenkbarer Arm 108 ist im Bereich der linken Seitenwange 74 stirnseitig positioniert, jedoch weist dieser Arm 108 keine Stellschraube 82 auf. Die Kontrolle der Ausrichtung des Bauteilträgers 6 erfolgt über die sechs Sensoren 32, die im Randabschnitt des Bauteilträgers 6 an diesem angreifen.

Das Bauteil 4 ist zwischen dem Anlagesystem 14 und dem Adapter 12 angeordnet. In dem gezeigten Schnitt befindet sich das Bauteil 4 mit seiner konkaven Oberfläche 8 in Anlage mit zwei Sensoren 22, die im Bereich eines Schaufelfußes 110 und eines Deckbandes 112 des Bauteils 4 angreifen. Im Bereich der konvexen Oberfläche 10 ist das Bauteil 4 über das Klebemittel 46 mit der Fügefläche 40 des Adapters 12 verbunden.

Der Adapter 12 ist über die Federelemente 48 in Richtung des Bauteils 4 vorgespannt, die abschnittsweise in Ausnehmungen 114 der Schutzhaube 50 eintauchen und sich am Grund der Ausnehmungen 114 abstützen.

Die Schutzhabe 50 hat in dem gezeigten U-förmigen Querschnitt zwei Seitenwände 116, 118, die über die Rückwand 68 miteinander verbunden sind. Die Ausnehmungen 114 zur Aufnahme der Federelemente 48 sind stirnseitig in den Seitenwänden 116, 118 ausgebildet. Zur Führung des Adapters 12 in z-Richtung ist an voneinander abgewandten Außenflächen 120, 122 der Seitenwände 116, 118 jeweils ein Finger 124 angeordnet, der an einer Seitenfläche 126, 128 des Adapters 12 angreift. Zum vereinfachten Bewegen bzw. Öffnen und Schließen des Arbeitsraums 56 ist an einer von der Strahlungsquelle 70 abgewandten Außenfläche 130 der Schutzhaube 50 ein Griff 132 angeordnet.

Im Folgenden wird ein bevorzugtes Ausführungsbeispiel eines erfindungsgemäßen Verfahrens zur Anbindung des Bauteils 4 an dem Bauteilträger 6 beschrieben: Zuerst wird der Bauteilträger 6 in die Aufnahme 28 eingesetzt und über die Stellschrauben 80, 82 lagefixiert. Dann wird das Bauteil auf dem Anlagesystem 14 der Fügevorrichtung 2 positioniert. Anschließend wird der Adapter 12 bereitgestellt und an seiner Fügefläche 40 und seiner Verbindungsfläche 42 mit dem Klebemittel 46 versehen. Anschließend wird der Adapter 12 in Richtung des Bauteils 4 bewegt, und es wird unter Einstellung eines optimalen Klebespaltes s1 eine Klebeverbindung zwischen der Fügefläche 40 des Adapters 12 und der konvexen Oberfläche 10 des Bauteils 4 hergestellt. Anschließend wird unter Beibehaltung des Klebespaltes s1 der Adapter 12 zum Bauteilträger 6 ausgerichtet und eine Klebeverbindung zwischen der Verbindungsfläche 42 des Adapters 12 und der Befestigungsfläche 30 des Bauteilträgers 6 wird hergestellt. Gleichzeitig wird die richtige Position des Bauteils 4 an dem Anlagesystem 14 und die richtige Position des Bauteilträgers 6 in der Aufnahme 28 über die Kontrolllampen 26, 36 der Anzeigentafeln 24, 34 kontrolliert. Nach dem Herstellen der Klebeverbindungen wird der Arbeitsraum 56 durch ein Verfahren der Schutzhaube 50 geschlossen und der Adapter 12 wird über die Federelemente 48 in seiner ausgerichteten Position gesichert. Sobald der Arbeitsraum 56 geschlossen ist und das Bauteil 4, der Adapter 12 sowie der Bauteilträger 6 ihre Ausrichtung zueinander nicht geändert haben, wird die Strahlungsquelle 70 angesteuert und das Klebemittel 46 beginnt aufgrund der emittierenden Strahlung 72 auszuhärten. Nach der Aushärtung wird die Bestrahlung beendet und der Arbeitsraum 56 wird über ein Verfahren der Schutzhaube 50 geöffnet. Der Bauteilträger 6 mit dem angebundenen Adapter 12 und dem Bauteil 4 wird der Fügevorrichtung 2 entnommen und in eine folgende Bearbeitungsmaschine zur Bearbeitung des Bauteils 4 eingespannt.

Nach der Bearbeitung des Bauteils 4 in der Bearbeitungsmaschine wird die Klebeverbindung zwischen dem Adapter 12 und dem Bauteil 4 sowie zwischen dem Adapter 12 und dem Bauteilträger 6 über zum Beispiel Wärmestrahlung aufgehoben, und der Bauteilträger 6 steht für eine erneute Bestückung und somit für eine erneute Verwendung in der Fügevorrichtung 2 bereit.

Offenbart ist eine Fügevorrichtung zum Anordnen eines Bauteils an einem Bauteilträger mit einem Anlagesystem zur Positionierung des Bauteils in der Fügevorrichtung und mit einer Aufnahme zum Einspannen des Bauteilträgers in der Fügevorrichtung, wobei das Bauteil über einen Adapter an dem Bauteilträger angeordnet ist, sowie ein Verfahren zur Anordnung des Bauteils an dem Bauteilträger.

## Patentansprüche

1. Fügevorrichtung (2) zum präzisen Anordnen eines Bauteils (4) an einem Bauteilträger (6) mit
- einem Anlagesystem (14) zur Positionierung des Bauteils (4) in der Fügevorrichtung (2) und
- mit einer Aufnahme (28) zum Einspannen des Bauteilträgers (6) in der Fügevorrichtung (2), wobei das Bauteil (4) über einen Adapter (12) an dem Bauteilträger (6) angeordnet ist, und
wobei der Adapter (12)
- eine einer Bauteilfläche (10) zugewandte konturnahe Fügefläche (40) aufweist und
- eine einer Bauteilträgerfläche (30) zugewandte Verbindungsfläche (42) hat, **dadurch gekennzeichnet, dass**
- das Anlagesystem (14) Sensoren (22) zur Kontrolle der Position des Bauteils (4) aufweist und
- die Aufnahme (48) Sensoren (32) zur Kontrolle der Position des Bauteilträgers (6) aufweist und
- Stützelemente (48) zum Stützen des Adapters (12) in seiner Sollposition vorgesehen sind.

2. Fügevorrichtung nach Anspruch 1, wobei der Adapter (12) zumindest abschnittsweise aus einem lichtdurchlässigen Basiskörper (44) besteht.

3. Fügevorrichtung nach einem der vorhergehenden Ansprüche, wobei eine Strahlungsquelle (70) zum Aushärten eines zwischen dem Adapter (12) und dem Bauteil (4) bzw. dem Bauteilträger (6) angeordneten Klebemittels (46) an einer von der Fügefläche (40) abgewandten Seite des Adapters (12) angeordnet ist.

4. Fügevorrichtung nach einem der vorhergehenden Ansprüche, wobei der Bauteilträger (6) in der Aufnahme (28) lagefixiert ist.

5. Fügevorrichtung nach einem der vorhergehenden Ansprüche, wobei der Bauteilträger (6) eine Basisplatte eines Nullpunkt-Spannsystems ist.

6. Verfahren zum Anordnen eines Bauteils (4) an einem Bauteilträger (6) unter Verwendung der Vorrichtung gemäß einem der Ansprüche 1 bis 5, umfassend die folgenden Schritte:
- Ausrichten und Lagefixieren des Bauteilträgers (6) in einer Aufnahme (28) einer Fügevorrichtung (2),
- Positionieren des Bauteils (4) an dem Anlagesystem (14),
- Bereitstellen eines Adapters (12) zwischen dem Bauteil (4) und dem Bauteilträger (6),
- Herstellen einer Klebeverbindung zwischen dem Adapter (12) und dem Bauteil (4) unter Einstellung eines Sollspalts (s1) zwischen dem Adapter (12) und dem Bauteil (4),
- Herstellen einer Klebeverbindung zwischen dem Adapter (12) und dem Bauteilträger (6) unter Beibehaltung des Sollspaltes (s1) zwischen dem Adapter (12) und dem Bauteilträger (6), und
- Aushärten der Klebeverbindungen.

7. Verfahren nach Anspruch 6, wobei die Aushärtung und Aufhebung der Klebeverbindungen mittels Strahlung (72), vorzugsweise unterschiedlicher Strahlung (72) erfolgt.

## Claims

1. Joining device (2) for precisely arranging a component (4) on a component carrier (6), said device comprising
- an application system (14) for positioning the component (4) in the joining device (2) and
- comprising a receiving portion (28) for clamping the component carrier (6) in the joining device (2),
the component (4) being arranged on the component carrier (6) via an adapter (12), and the adapter (12)
- comprising a close-contour faying surface (40) facing a component surface (10) and
- having a joint surface (42) facing a component carrier surface (30),
**characterized in that**
- the application system (14) comprises sensors (22) for controlling the position of the component (4) and
- the receiving portion (48) comprises sensors (32) for controlling the position of the component carrier (6) and
- support elements (48) are provided for supporting the adapter (12) in its desired position.

2. Joining device according to claim 1, wherein the adapter (12) consists at least in portions of a transparent base body (44).

3. Joining device according to either of the preceding claims, wherein a radiation source (70) for curing an adhesive (46) arranged between the adapter (12) and the component (4) or the component carrier (6) is arranged on a side of the adapter (12) facing away from the faying surface (40).

4. Joining device according to any of the preceding claims, wherein the component carrier (6) is fixed in position in the receiving portion (28).

5. Joining device according to any of the preceding claims, wherein the component carrier (6) is a base plate of a zero-point clamping system.

6. Method for arranging a component (4) on a component carrier (6) using the device according to any of claims 1 to 5, comprising the following steps:
- orienting the component carrier (6) and fixing said carrier in position in a receiving portion (28) of a joining device (2);
- positioning the component (4) on the application system (14);
- providing an adapter (12) between the component (4) and the component carrier (6);
- producing an adhesive joint between the adapter (12) and the component (4) while setting a desired gap (s1) between the adapter (12) and the component (4);
- producing an adhesive joint between the adapter (12) and the component carrier (6) while maintaining the desired gap (s1) between the adapter (12) and the component carrier (6); and
- curing the adhesive joints.

7. Method according to claim 6, wherein the curing and the removal of the adhesive joints take place by means of radiation (72), preferably different radiation (72).

## Revendications

1. Dispositif d'assemblage (2) pour la disposition précise d'un composant (4) sur un support de composant (6) comportant
- un système d'installation (14) permettant de positionner le composant (4) dans le dispositif d'assemblage (2) et
- comportant un réceptacle (28) pour enserrer le porte-composant (6) dans le dispositif d'assemblage (2),
le composant (4) étant disposé sur le support de composant (6) par l'intermédiaire d'un adaptateur (12), et dans lequel l'adaptateur (12)
- présente une surface d'assemblage (40) proche du contour orientée vers une surface de composant (10) et
- possède une surface de connexion (42) orientée vers une surface de support de composant (30),
**caractérisé en ce que**
- le système d'installation (14) présente des capteurs (22) permettant de contrôler la position du composant (4) et
- le réceptacle (48) présente des capteurs (32) permettant de contrôler la position du support de composant (6) et
- des éléments d'appui (48) sont prévus pour caler l'adaptateur (12) dans sa position de consigne.

2. Dispositif d'assemblage selon la revendication 1, dans lequel l'adaptateur (12) est constitué, au moins par sections, d'un corps de base (44) transparent.

3. Dispositif d'assemblage selon l'une des revendications précédentes, dans lequel une source de rayonnement (70) destinée à durcir un adhésif (46) disposé entre l'adaptateur (12) et le composant (4) ou le support de composant (6) est disposée au niveau d'un côté de l'adaptateur (12) opposé à la surface d'assemblage (40).

4. Dispositif d'assemblage selon l'une des revendications précédentes, dans lequel le support de composant (6) est fixé en position dans le réceptacle (28).

5. Dispositif d'assemblage selon l'une des revendications précédentes, dans lequel le support de composant (6) est une plaque de base d'un système de serrage à point zéro.

6. Procédé de disposition d'un composant (4) sur un support de composant (6) en utilisant le dispositif selon l'une des revendications 1 à 5, comprenant les étapes suivantes :
- aligner et fixer en position le support de composant (6) dans un réceptacle (28) d'un dispositif d'assemblage (2),
- positionner le composant (4) sur le système d'installation (14),
- prévoir un adaptateur (12) entre le composant (4) et le support de composant (6),
- produire une liaison adhésive entre l'adaptateur (12) et le composant (4) tout en créant un intervalle défini (s1) entre l'adaptateur (12) et le composant (4),
- produire une liaison adhésive entre l'adaptateur (12) et le support de composant (6) tout en maintenant l'intervalle défini (s1) entre l'adaptateur (12) et le support de composant (6), et
- durcir les liaisons adhésives.

7. Procédé selon la revendication 6, dans lequel le durcissement et la suppression des liaisons adhésives est effectué au moyen d'un rayonnement (72), de préférence d'un rayonnement différent (72).
